# EUROPEAN PATENT APPLICATION

(11) **EP 2 420 339 A1**
(43) Date of publication of application: **22.02.2012**
(21) Application number: 10009706.2
(22) Date of filing: 16.09.2010
(51) Int. Cl.: B23D 45/00, B27B 5/00

(54) **Cutting apparatus and cutting method**

(30) Priority: 16.08.2010 JP 2010181524
(71) Applicant: Shibuya, Shouichi, Aoba Sendai (JP)
(72) Inventor: Shibuya, Shouichi, Aoba Sendai (JP)
(74) Representative: Müller - Hoffmann & Partner

(57) **Abstract**

A cutting apparatus including a rotational cutter device disposed on a self-propelled machine. A device for jetting water used to prevent the scatter of dust from a jetting opening disposed near the cutting blade. And a cutting method including muddy dust and collected water are sent from the water tank to a filtering device. Clean water obtained by being filtered is stored in another water tank. And water is again supplied from water tank to the jet opening.

## Description

### BACKGROUND OF THE INVENTION

### 1.Field of the invention

The present invention relates to a cutting apparatus and a cutting method that are suitably used to cut long objects, such as wing plates of a large-sized windmill.

Power generation using a large-sized windmill can be often seen as a part of effective use of natural energy. However, windmill wing plates are required to be replaced with new ones because of the end of their lives or because of damage from, for example, typhoons.

### 2.Description of the prier art

Conventionally, it is possible to see many examples in which a hand cutter having a rotatable cutting blade is used by human power in order to cut wing plates of such a large-sized windmill. However, fiber reinforced plastic (FRP) is primarily used as the material of the wing plate, thus causing the danger that dust will occur during a cutting operation and, accordingly, a worker will inhale this dust. Additionally, there is a danger that the worker will be injured by the faulty operation of the hand cutter. In particular, such windmills are disposed at a windswept place, and therefore it is easily possible to imagine a situation in which the worker is blown by a gust and, as a result, is injured by incorrectly operating a rotating hand cutter.

By the way, to ensure worker's safety, the present inventor has proposed a cutting apparatus controllable remotely from a driver's seat in which a cutter that is rotated by a hydraulic motor is attached to a forward end of an arm of a self-propelled machine, such as a backhoe, in order to perform straight cutting before this (see US Patent No. 6257221).

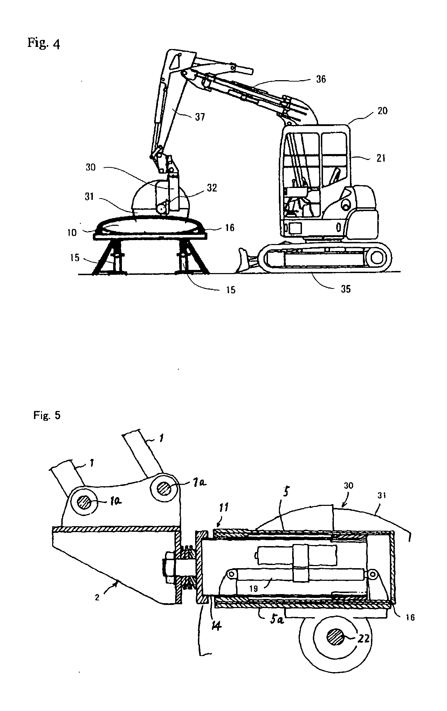

The essential structure of the cutting machine, as shown in Fig 5, including a base connected to an end of an arm 1 of the construction machine with a pin 1a. A cutter mounting assembly 11 is rotatable relative to the base, and a rotary cutter 31 mounted on the cutter mounting assembly 11. The cutter mounting assembly 11 has a fixed portion 14 and a movable portion 16, a drive device that extend and retracts linearly disposed on fixed portion 14, the rotary cutter 30 disposed on the movable portion 16, the rotary cutter mounting assembly 11 being rotatable relative to the base 2.

However, if the material of a windmill wing plates are fiber reinforced plastic (FRP) as mentioned above, a cutting operation performed in an environment in which there is a fear that a worker will inhale dust floating when the windmill wing plates are cut will exert a bad influence on the worker's body, and therefore this cutting operation must be avoided from the viewpoint of labor hygiene.

### SUMMARY OF THE INVENTION

The present invention has been made in consideration of these circumstances, and it is an object of the present invention to provide a cutting apparatus and a cutting method that are capable of eliminating an industrial-safety danger while preventing a worker from suffering some harm by, for example, a sudden gust blowing during a cutting operation without allowing the worker to inhale dust when a windmill wing plate is cut and that are capable of having high work efficiency by performing a cutting operation by use of a rotational cutter device disposed on, for example, a self-propelled machine remotely from a place at which a windmill wing plate is cut without allowing a worker to directly manually operate a cutter device and without employing a cutting method using a hand cutter.

It is another object of the present invention to provide a cutting apparatus and a cutting method that are capable of efficiently using a small amount of water by again jetting water that has been cleaned by filtering muddy water mixed with dust onto a rotational cutter device in order to secure a necessary amount of water used to prevent the occurrence of dust when the rotational cutter device is operated.

The present invention is characterized by including a means for bringing a cutting blade of a rotational cutter device disposed on a self-propelled machine close to an object to be cut, and a means for jetting water used to prevent the scatter of dust from a jet opening disposed near the cutting blade, and is characterized in that the object is cut while controllably performing a cutting operation and a water jetting operation remotely from a driver's seat of the self-propelled machine.

Secondly, the present invention is characterized by including a means for bringing a cutting blade of a rotational cutter device disposed on a self-propelled machine close to an object to be cut, and a means for jetting water used to prevent the scatter of dust from a jet opening disposed near the cutting blade, and is characterized in that a cutting operation and a water jetting operation are controlably performed remotely from a driver's seat of the self-propelled machine, and muddy dust is received by a water tank disposed under a cut position of the object and is temporarily collected when the object is cut, thereafter the muddy dust and collected water are sent from the water tank to a filtering device, thereafter clean water obtained by being filtered is stored in another water tank, and is again supplied from this water tank to the jet opening.

According to the present invention, a cutting operation performed by the rotational cutter device disposed on the self-propelled machine does not rely on a manual cutting device that has been used in a conventional technique, and this cutting operation is remotely performed by a worker that is located at the driver's seat of the self-propelled machine and that is remote from the rotational cutter device. Therefore, the worker can be prevented from inhaling dust, and can be beforehand prevented from being killed or injured by an accident resulting from a faulty operation of a manual cutting apparatus. Additionally, in a cutting operation using a conventional hand cutter device, a guide bar or the like is additionally required to make a cut line straight, and, as a result, time and labor are consumed for arrangement, and, when an object is cut only by a hand cutter, the cutter swings rightwardly and leftwardly, so that the resistance of the rotational disc cutter during rotation becomes high, and cutting efficiency becomes low. If this cutting operation is forcibly or excessively performed, the disc itself or the tip will be damaged, and there is a danger that broken pieces thereof will hit and give the worker wounds. However, according to the present invention, the straight cutting operation can be easily carried out.

Additionally, according to the present invention, even if dust is generated during a cutting operation, the dust is soon brought into a muddy state by jetted water, and is collected in the water tank disposed under the machine, and therefore the problem of dust floating through the air can be solved, and water containing this dust can be reused as clean water by the filtering device, and the energy-saving effect is fulfilled, and there is no fear that the place near the object cut into pieces will be made dirty. In particular, there is a possibility that environmental pollution will be caused depending on the material of the cut pieces of the object, and therefore pollutants generated by the cutting operation can be safely collected. In particular, the place at which windmill wing plates are cut is set up in a national park in most cases, and special attention must be paid to the conservation of natural environment, and therefore the present invention is also excellent for such natural environmental measures.

### BRIEF DESCRIPTION OF THE DRAWINGS

Fig. 1 is a side view of the wing plate (example of long structure).
Fig. 2 is a plan view of the wing plate.
Fig. 3 is a side perspective view of the present invention.
Fig. 4 is a side perspective view of the present invention.
Fig. 5 is a sectional view cutting machine of the prier arts.

### DISCRIPTION OF THE PREFERRED EMBODIMENT

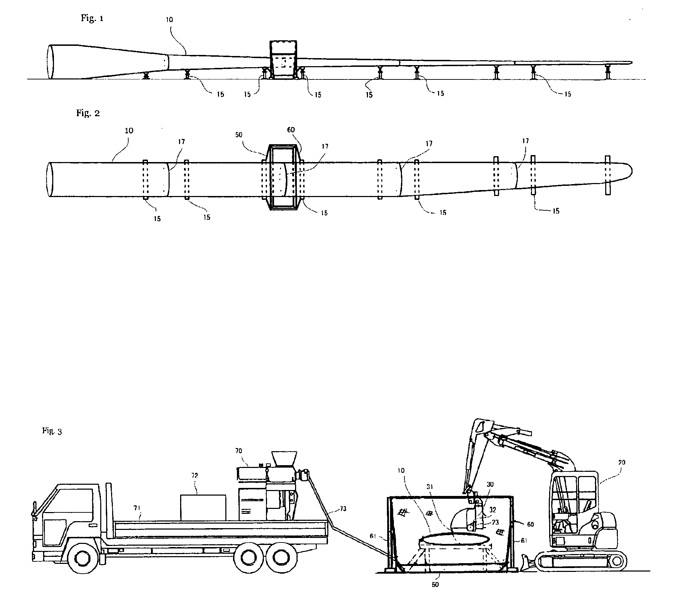

Fig. 1 and Fig. 2 are a side view and a plan view, respectively, showing a windmill wing plate. Some of the wing plates 10 of large-sized windmills have a length of thirty meters, and therefore, generally, a wing plate that has been damaged or whose life has been ended is first cut into parts each of which has a predetermined length, and is then disjointed into pieces. Therefore, in order for each of such wing plate parts to have a length long enough to be loaded on a transport truck, the wing plate is cut into several wing plate parts at a place at which the windmill is located in most cases.

As shown in Fig. 1, the wing plate 10 that has been laid on the ground has points specified to be cut, and is cut into so-called round slices at these points. At that time, from industrial-safety considerations, a cutting operation is performed by a cutter device 30 that controllably rotates a large disc cutter disposed on a crawler-type self-propelled machine 20 as shown in Fig. 3 without allowing a worker to directly operate the cutter device with worker's hands. A rotating torque obtained by a hydraulic motor is secured so that a disc blade 31 whose maximum diameter is about two meters can be attached. Its driving force is generated by the rotation of the hydraulic motor 32 by use of pressure oil controlled by a hydraulic driving device built in the self-propelled machine 20.

As shown in Fig. 4, the cutter device 30 has a structure in which a crawler 35 is employed as a lower mobile body, in which an upper rotary body is provided with a hydraulic motor 32 built in a forward end of the upper rotary body via a boom 36 and an arm 37, and in which a cutting disc 31 is rotatably attached to a rotary shaft of the hydraulic motor 32. Therefore, when the wing plate 10 is cut, the cutter device 30 can be freely moved upwardly, downwardly, forwardly, and backwardly by controllably operating the cutter device 30 through the boom 36 and the arm 37 from a driver's seat 21 located at a remote position.

In order to prevent dust generated during a cutting operation from being scattered near there, a water tank 50 movable to a place under a point at which the wing plate is cut is disposed, and a scatter-preventing curtain 60 is stretched on all sides above the water tank 50 as shown in Fig. 3. A thick waterproof sheet is suitable as the curtain 60. The curtain 60 is supported by support pillars 61 erected near the four corners of the water tank 50, and can be set to have a height of about 50 to 150 centimeters. Consideration is given to put the lower end of the curtain 60 into the water tank 50 so that dust generated during a cutting operation can be stopped inside the curtain 60 and can sink in the water tank 50 in a muddy state.

In order to prevent dust generated during a cutting operation from being scattered near there, the cutter device 20 has a jetting device 23 that jets clean water onto the neighborhood of the rotating disc cutter blade 21 and of the wing plate 10. The water jetting device 23 is used also as a device for preventing the disc from being heated during a cutting operation, and makes dust heavier by bringing the dust into a muddy state with water and then guides the dust to the water tank 50 disposed on the lower side. Sludge and dirty water collected in the water tank 50 are sucked up by a pump to a filtering device 70 disposed on the truck bed of a truck 71 stopped near there as shown in Fig. 3, and water that has been cleaned is temporarily introduced into another water tank 72, and is supplied to a jet opening of the jetting device 23 from the water tank 72 at any time so as to be used as cutting water for the disc cutter. Piping by which the devices are connected together is not shown. A pump for pressurizing when necessary is disposed in a duct circuit 73 for cutting water.

Next, a cutting method of cutting a long object, such as the windmill wing plate 10, will be described. First, to substantially horizontally hold the wing plate 10, which is to be cut, of the large-sized windmill, a support stand 15 is disposed at each place located at an intermediate position between points at which the wing plate 10 is cut, and the wing plate 10 is fixed substantially horizontally and stably as shown in Fig. 1 and Fig. 2. The wing plate 10 may be fixed by, for example, rope or lever blocks 16 if necessary. Usually, the wing plate 10 itself of the large-sized windmill is heavier, and hence is stably held on the support stands 15.

Thereafter, as shown in Fig. 2, marks 17 each of which is obtained by drawing a line and at which the wing plate 10 is first cut are put onto the wing plate 10, and then the water tank 50 is disposed thereunder, and the curtain 60 is disposed above the water tank 50. Cuts that respectively coincide with cross sections of the wing plate 10 are beforehand made in the curtain 60. An adhesive tape or the like can be fixedly glued onto the wing plate 10 and onto the cut parts of the curtain 60 contiguous thereto so that water does not leak to the outside. The upper part of the curtain 60 is opened, and therefore the self-propelled disc cutter device 20 is brought close thereto, and its cutting disc blade is brought close to the wing plate 10 as shown in Fig. 3. The wing plate 10 starts to be cut while jetting water and rotationally driving the disc blade 31 by performing an operation through the arm/boom from the driver's seat of the self-propelled machine 20 (of the crawler type or the tire type) remote from the disc blade. A disc blade whose diameter is about two meters is used as the cutting disc blade 31, and the wing plate 10 of the large-sized windmill can be cut by pulling or pushing the disc blade 31.

In this case, although dust is generated during this cutting operation, the dust is brought into a muddy state by jet water emitted from the water jetting device 23 disposed near the disc blade 31, and falls into the water tank 50. Additionally, the dust is never scattered near there by the curtain 60 by which the wing plate 10 is enclosed on the four sides.

In this case, even if the cutting operation is completed, the wing plate 10 that has been cut into pieces never moves or never falls because of the support stands 15.
Thereafter, the self-propelled disc cutter device 20 is temporarily moved to a safe position, and then short pieces into which the wing plate 10 is cut are horizontally pulled out from the curtain 60, and are moved to another storage place. Thereafter, the curtain 60, the water tank 50, and the other auxiliary parts of equipment are moved to a next cut position, and then an adhesive tape or the like is again glued onto a gap between the curtain 60 and the wing plate 10 so that water does not leak, and a second cutting step is allowed to proceed. Thereafter, the process proceeds to a final cutting step in the same manner, and the cutting operation is completed.

### Industrial Applicability

The present invention is applied to the cutting of long objects. In particular, the present invention is suitably applied to the cutting of wing plates of a large-sized windmill. Additionally, the present invention can be carried out even for a cutting operation at remote and secluded places in the mountains or even for a cutting operation at places at which dust-preventing water cannot be easily secured.
However, without being limited to the cutting of windmill wing plates, the present invention can be applied to, for example, the cutting of wing plates of an aircraft, the cutting of stone, or the cutting of metal-made or synthetic-resin-made pipes, and can be widely applied to general cases, such as a case in which dust is troublesomely generated during a cutting operation.

## Claims

1. A cutting apparatus comprising:
a) cutting blade of a rotational cutter device disposed on a self-propelled machine means;
b) a means for jetting water used to prevent the scatter of dust from jet opening disposed near said cutting blade;
c) a water tank that received muddy dust disposed under a cut position of the object when cutting operation remotely from a driver's seat of the self-propelled machine.

2. A cutting apparatus as claimed in claim 1 wherein said water tank comprise:
muddy dust and collected water be supplied to a filtering device.

3. A cutting apparatus as claimed in claim 1 and/or 2 wherein said filtering device comprise:
clean water obtained by being filtered is stored in another water tank, and is again supplied from this water tank to the jet opening.

4. A cutting apparatus as claimed in claim 1, 2 and/or 3 wherein said water tank and said jet opening comprise:
a pomp device provided to pressure in the piping for water.

5. A cutting apparatus as claimed in claim 1 wherein said self-propelled machine means comprise:
crawler-type driving structure.

6. A cutting apparatus as claimed in claim 1 wherein said self-propelled machine means comprise:
tire-type driving structure.

7. A cutting apparatus as claimed in claim 1 wherein said cutting apparatus comprise:
for using cut long objects such as wing plate of the windmill.

8. A cutting method for cutting a rotational cutter device disposed on a self-propelled
machine means comprising the step of:
a) a water tank is disposed under a long structure for cutting;
b) a certain is disposed above said water tank;
c) a self-propelled disc cutter device is brought cutting structure and cutting while
jetting water and rotationally driving said cutter device;
d) dust is brought into a muddy state by jet water emitted from said jetting device, and
falls into said water tank.

9. A cutting method for cutting a rotational cutter device disposed on a self-propelled machine means comprising the step of:
a) a water tank is disposed under a long structure for cutting;
b) a certain is disposed above said water tank;
c) a self-propelled disc cutter device is brought cutting structure and cutting while jetting water and rotationally driving said cutter device;
d) dust is brought into a muddy state by jet water emitted from said jetting device, and falls into said water tank;
e) muddy dust and collected water are sent from said water tank to a filtering device;
f) clean water obtained by being filtered is stored in another water tank, and is again supplied from said another water tank to a jet opening of said disc cutter device.
